# EUROPEAN PATENT SPECIFICATION

(11) **EP 3 466 684 B1**
(45) Date of publication and mention of the grant of the patent: **01.12.2021**
(21) Application number: 17806845.8
(22) Date of filing: 02.06.2017
(51) Int. Cl.: B32B 27/32, B29C 45/14, B29C 51/12, B29C 51/14, B32B 27/20, C08K 3/08, C08L 101/00, B32B 27/08, B32B 27/36, B32B 27/30

(54) **LAMINATE, MOLDED BODY AND METHOD FOR PRODUCING MOLDED BODY**
LAMINAT, FORMKÖRPER UND VERFAHREN ZUR HERSTELLUNG EINES FORMKÖRPERS
STRATIFIÉ, CORPS MOULÉ ET PROCÉDÉ DE PRODUCTION DE CORPS MOULÉ

(30) Priority: 02.06.2016 JP 2016111258
(43) Date of publication of application: 10.04.2019
(73) Proprietor: Idemitsu Unitech Co., Ltd., Tokyo 108-0014 (JP); Oike&Co., Ltd., Kyoto-shi, Kyoto 600-8461 (JP)
(72) Inventor: KONDO, Kaname, Sodegaura-shi Chiba 299-0205 (JP); ARAKI, Ryosuke, Sodegaura-shi Chiba 299-0205 (JP); TADA, Keishi, Minato-ku Tokyo 108-0014 (JP); MATSUURA, Tatsuro, Sodegaura-shi Chiba 299-0205 (JP); KAINOU, Yusuke, Kyoto-shi Kyoto 601-8123 (JP); HAKIRI, Norio, Kyoto-shi Kyoto 601-8123 (JP)
(74) Representative: Gille Hrabal Partnerschaftsgesellschaft mbB Patentanwälte
(86) International application number: PCT/JP2017/020701
(87) International publication number: WO 2017/209295

(56) References cited:
- WO-A1-2015/146217
- JP-A- S5 527 203
- JP-A- H03 288 641
- JP-A- H11 172 059
- JP-A- 2000 239 394
- JP-A- 2006 123 512
- JP-A- 2006 240 156
- JP-A- 2006 321 124
- JP-A- 2014 198 414
- JP-A- 2016 065 262

## Description

### Technical field

The invention relates to a laminate, a formed body and a method for producing the formed body.

### Background Art

Painting is used in various fields such as automobiles, home electric appliances, building materials, daily necessities and information communication equipment, as a method for improving a design effect of the appearance. However, the painting discharges a large amount of volatile organic compounds (VOC), and accordingly is means imposing a large environmental burden. Furthermore, in processes of a temperature and humidity control for the painting booth, and baking, a large amount of energy is consumed, and a large amount of carbon dioxide is discharged. Particularly in the manufacture of automobiles, the painting accounts for 20% of the carbon dioxide to be discharged, and the means which substitutes for the painting has been actively developed in order to reduce the environmental burden associated with the painting.

Alternative means for the painting include a method of covering a surface of a housing with a film. This method has lower environmental burden than the painting. For the decoration of the housing with a film, a design is generally given by printing on a transparent film. However, the printing suffers from a limit in design expressions of high brightness such as pearl tones and metallic tones, and the finish is far from that of the painting.

Patent Literature 1 discloses a decorating sheet formed of a laminate of a brilliant layer and a clear layer as the alternative means of the painting, in which the decorated sheet is bonded to the surface of the housing for decoration.

Patent Literature 2 discloses a decoration sheet having high brightness obtained by mixing a high brightness pigment with an adhesive for laminating sheets. An adhesive layer containing the high brightness pigment is formed by dissolving an adhesive in an organic solvent and applying the resultant solution to a base material with a knife coater or the like.

Patent Literature 3 discloses a method for producing a metal foil powder obtained by crushing a laminate having a metal thin film layer.

WO 2015/146217 A1 corresponding to EP 3 124 240 A1 discloses a decorative sheet and a decorative plate using the same, the decorative sheet comprising a base material layer and at least a transparent resin layer, both made from polypropylene, wherein the transaprent base material may contain additives like pearlescent pigments comprising foil powder, and a method for producing a formed body such as a decorative plate.

JP 2006-123512 A discloses a decorative sheet for flooring material which exerts excellent impact resistance without forming a backer layer, and also excellent scratch resistance. The decorative sheet comprises a picture pattern, a transparent adhesive, a transparent polyproylene-based resin and a transparent surface-protective layer comprising an ionization radiation-curing resin or two-pack curing urethane resin, in this order, on a substrate made of a polyolefin-based resin.

JP S55 27203 A discloses a process for improving transparency and rigidity of a polypropylene sheet having smectic structure in its crystalline region, which is obtained by rolling or orientating the sheat at a specific temperature to permit a solid-phase transaition into the α structure.

### Prior Art Document

### Patent Literature

Patent Literature 1: Japanese Patent Laid-Open No. 2006-321124
Patent Literature 2: Japanese Patent Laid-Open No. H8-156215
Patent Literature 3: Japanese Patent Laid-Open No. 2016-65262

### Summary of Invention

However, in Patent Literature 1, even for the decorated sheet, a part of the sheet may be whitened depending on a shape of the housing, and an intended decorating effect cannot be obtained in some cases. In Patent Literature 2, bad phenomena such as a diffusion of VOC and/or the swelling of the adhesive occur, by a residual solvent may occur. In addition, there is also a problem that when a film thickness of the adhesive layer is increased in order to improve a sense of brightness, the amount of the residual solvent increases, and accordingly the occurrence of the bad phenomena may further increase.

In Patent Literature 3, the method for producing the metal foil powder is described, but evaluation of a laminate using the metal foil powder is not carried out.

An object of the invention is to provide a laminate that can cope with a complicated three-dimensional shape and can give a sense of brightness and a depth of a design.

According to the invention, the laminate, the formed body and methods for producing a formed body are provided according to the claims.

According to the invention, a laminate can be provided which can cope with a complicated three-dimensional shape and give a sense of brightness and a depth of a design.

### Brief Description of Drawings

[Figure 1] Figure 1 is a schematic structural view of a manufacturing apparatus used for producing a laminate of Example 1.
[Figure 2] Figure 2 is a schematic structural view of a manufacturing apparatus used for producing a laminate of Comparative Example 1.
[Figure 3] Figure 3 is a schematic structural view showing one example of a manufacturing apparatus for carrying out profile extrusion molding.

### Description of Embodiments

### <Laminate>

A first laminate of the invention is a laminate including, in the following order: a first layer formed of polypropylene containing a smectic crystal; and a second layer formed of a resin composition containing a thermoplastic resin and a metal foil powder, wherein the metal foil powder in the second layer is a flattened piece having a laminate structure in which both surfaces of a metal thin film layer are each covered with a transparent thin film layer.

In the first laminate of the invention, the first layer formed of the polypropylene containing the smectic crystal functions as a layer imparting a depth of a design to the second layer. In addition, the second layer formed from the resin composition containing the thermoplastic resin and the metal foil powder functions as a layer imparting the sense of brightness to the laminate by light strongly reflected by the metal foil powder.

A second laminate of the invention is a laminate including, in the following order: a first layer formed of polypropylene containing a smectic crystal; a second layer formed of a resin composition containing a thermoplastic resin and a metal foil powder; and a third layer formed of a resin composition containing a thermoplastic resin and a coloring agent, wherein the metal foil powder in the second layer is a flattened piece having a laminate structure in which both surfaces of a metal thin film layer are each covered with a transparent thin film layer.

The second laminate of the invention is the same as the first laminate, except that the laminate further includes the third layer formed of the resin composition containing the thermoplastic resin and the coloring agent. The third layer is a colored layer containing the coloring agent. The third layer prevents a transmission of visible light, increases the amount of reflecting light at the second layer to enhance the luminance, and can achieve a high brightness design such as a pearl tone and a metal tone, which could not be achieved by a conventional printing method or the like. In addition, the third layer can impart various designs by arbitrarily changing the color of the coloring agent.

Hereafter, the first laminate and the second laminate of the invention are occasionally referred to collectively as "laminate of the invention".

The laminate of the invention may include the first layer and the second layer in this order, or may include the first layer, the second layer and the third layer in this order, and may further include another layer.

The layer configurations of the laminates of the invention include: first layer/second layer/first layer; first layer/second layer/third layer; first layer/second layer/third layer/first layer; first layer/second layer/resin layer/third layer; and first layer/second layer/resin layer/third layer/first layer.

Incidentally, the above described "resin layer" is a layer, for example, formed of a thermoplastic resin which is the same as or different from the thermoplastic resin constituting the second layer.

Each layer of the laminate of the invention will be described below.

The first layer is a layer formed of polypropylene containing a smectic crystal.

The polypropylene is a crystalline resin and can take crystalline forms of an α crystal, a β crystal, a γ crystal, a smectic crystal and the like. The smectic crystal among these crystalline forms can be formed by cooling polypropylene from a molten state at a rate of 80°C per second or more, as an intermediate between an amorphous form and a crystalline form. The upper limit value of the cooling rate is not particularly limited, but is usually 500°C per second or less. The smectic crystal is not a stable structure having a regular structure like crystals, but a metastable structure in which fine structures gather. Because of this, the interaction between the molecular chains is weak, and has a property of being easily softened when heated, as compared with the α crystal and the like having a stable structure.

The first layer of the laminate of the invention is formed of the polypropylene containing the smectic crystal, thereby a stress at the time of shaping the first layer decreases and whitening of the first layer can be prevented. Accordingly, even if the laminate of the invention is formed into a complicated three-dimensional shape, the design is not impaired. The proportion of the smectic crystal in the first layer is more preferably 30% or more, 50% or more, 70% or more, or 90% or more.

It can be confirmed by a method described in the Example that the first layer is formed of the polypropylene containing the smectic crystal.

Incidentally, in the case, for example, where the first layer does not contain the smectic crystal but is formed of the polypropylene containing the α crystal having a stable structure, when the laminate is shaped into a three-dimensional shape by vacuum forming or the like, an interaction between molecular chains in the first layer becomes larger as compared with the case of the smectic crystal. Because of this, in a portion which is largely drawn such as an R portion and a boss, the portion is forcibly stretched and the first layer is whitened; and the sense of brightness and the depth of the design may be lost.

The polypropylene containing the α crystal in a stable state is also generated when a nucleating agent is used for clarification, in addition to the heating temperature.

It is preferable that the first layer contain no nucleating agent.

In order to make polypropylene which is a crystalline resin transparent, for example, a method of cooling the polypropylene at 80°C/sec or more to form the smectic crystal, when producing the first layer and a method of adding the nucleating agent to forcibly generate fine crystals are available. The nucleating agent improves the crystallization speed of the polypropylene to a speed exceeding 2.5 min⁻¹, generates and charges many crystals, thereby physically eliminates growing spaces, and reduces the size of the crystals. However, the nucleating agent includes a substance which becomes a nucleus, and accordingly the polypropylene becomes slightly white even when having become transparent, and accordingly the design effect may deteriorate.

Then, a laminate excellent in the design effect can be obtained by setting the crystallization speed of polypropylene at 2.5 min⁻¹ or less without adding the nucleating agent, and cooling the polypropylene at 80°C/second or more to form the smectic crystal. Furthermore, when the laminate is heated with an infrared heater and is shaped, the first layer is converted into the α crystal while maintaining the microstructure originating in the smectic crystal. Due to this conversion, surface hardness and transparency can be further improved as compared with the case where the nucleating agent is used.

The melt flow rate (Melt Flow Rate: hereinafter referred to as MFR, and sometimes described as melt flow index as well) of the polypropylene of the first layer is preferably 0.5 g/10 minutes or more and 15 g/10 minutes or less. The melt flow rate is more preferably 0.5 g/10 minutes or more and 5.0 g/10 minutes or less, and further preferably 2.0 g/10 minutes or more and 4.0 g/10 minutes or less.

When the MFR is less than 0.5 g/10 minutes, the shear stress in the die slip portion at the time of extrusion molding becomes strong, which may accelerate the crystallization and lower the transparency. On the other hand, when the MFR exceeds 15 g/10 minutes, the drawdown may become large at the time of thermoforming and the formability may decrease.

The MFR can be measured at a measurement temperature of 230°C and by a load of 2.16 kg in accordance with JIS-K 7210.

The polypropylene of the first layer is preferably polypropylene having an isotactic pentad fraction of 85 mol% to 99 mol%, from the viewpoint of scratch resistance. The isotactic pentad fraction is an isotactic fraction by a pentad unit (that means a state in which 5 continuous propylene monomers are isotactically bonded to each other) in a molecular chain of a resin composition.

The isotactic pentad fraction of the polypropylene is preferably 85 mol% to 99 mol%, and more preferably 90 mol% or more. When the isotactic pentad fraction is less than 85 mol%, the surface hardness is inferior, and the surface of the laminate may be scratched and the appearance may be impaired.

The isotactic pentad fraction of the polypropylene of the first layer can be confirmed by a method described in the Example.

The polypropylene of the first layer is preferably polypropylene having a crystallization speed of 2.5 min⁻¹ or less at 130°C, from the viewpoint of formability. The lower limit value is not particularly limited, but is usually 0.01 min⁻¹ or more.

The crystallization speed of the polypropylene is preferably 2.5 min⁻¹ or less, and more preferably 2.0 min⁻¹ or less. When the crystallization speed exceeds 2.5 min⁻¹, in the laminate which has been heated and softened when having been shaped, a portion that has firstly come in contact with the mold may be rapidly cured to aggravate the elongation, and a portion that is forcibly stretched may be whitened to decrease the design effect.

The crystallization speed at 130°C can be measured, for example, by using a differential scanning calorimeter.

A thickness of the first layer may be appropriately determined according to the shape and size of a structure to be decorated; and for example, is 5 µm to 300 µm, and is preferably 10 µm to 200 µm.

As for thicknesses of each layer, the thicknesses in a depth direction of each of the layers can be measured by cutting the cross section, for example, with a sliding microtome HM340E (manufactured by Micron Technology), and magnifying and observing the cross section with an optical microscope.

In addition, whether or not the polypropylene of the first layer is obtained by cooling at 80°C/second or more can be determined by calculating the scattering intensity distribution and the long period by, for example, a small angle X-ray scattering analysis method. Specifically, it is possible to determine whether or not the polypropylene of the first layer has a microstructure originating in the smectic crystal by the above described analysis. Measurement is performed under the following conditions.
- ultraX 18HF (manufactured by Rigaku Corporation) is used as an X-ray generator, and an imaging plate is used for detecting the scatter.
- Light source wavelength: 0.154 nm
- Voltage/Current: 50 kV/250 mA
- Irradiation time: 60 min
- Camera length: 1,085 mm
- Sample thickness: the sheets are overlapped so that the thickness becomes 1.5 to 2.0 mm.
The sheets are overlapped so that the film forming (MD) directions become equal.

In addition, the polypropylene of the first layer preferably has an exothermic peak of 1.0 J/g or more (more preferably 1.5 J/g or more) on a low temperature side of the maximum endothermic peak in a differential scanning calorimetry curve. The upper limit value is not particularly limited, but is usually 10 J/g or less.

The exothermic peak can be measured, for example, by using a differential scanning calorimeter.

The second layer is a layer formed of a resin composition containing a thermoplastic resin and a metal foil powder.

The metal foil powder in the second layer is a flattened piece having a laminate structure in which both surfaces of a metal thin film layer are each covered with a transparent thin film layer. By using the metal foil powder which is the flattened piece, the laminate of the invention can express a design with a high sense of brightness, which cannot be expressed by painting.

When a glossy pigment is granular, incident light rays diffusely reflect, and glossy feeling may not be sufficiently obtained. On the other hand, if the glossy pigment is a layered flattened piece, diffuse reflection of the incident light rays decreases as compared with the case of the granular shape, and the metallic glossy feeling can be increased. However, the glossy pigment not having the layered structure (laminate structure), such as a glass flake or an aluminum flake, cannot provide a design with the high sense of brightness, in some cases. For example, the aluminum flake has a high reflectivity of aluminum itself, but the smoothness of the surface is poor, and accordingly the proportion of the diffuse reflection increases and the design with the high sense of brightness cannot be obtained in some cases; and the glass flake has high smoothness and flatness, but the reflectivity of glass itself is lower than that of metals, and accordingly the design with the high sense of brightness cannot be obtained, in some cases.

In order to obtain the glossy feeling by using the flattened piece, it is preferable that the flattened piece have a flat shape with an aspect ratio as high as possible. Incidentally, the aspect ratio which is referred to here is a value obtained from the average major axis/average thickness of the flattened piece.

It is preferable that the shape of the metal foil powder contained in the second layer be an indefinitely shaped flattened piece. In the flattened piece, it is preferable that the average value (average major axis) of lengths from an end to an end, each of which becomes longest on the surface, be 10 µm or more, and a ratio (average major axis/thickness) of the average major axis to the thickness of the flattened piece be 2.5 or more. The upper limit value of the average major axis is not particularly limited, but is usually 1000 µm or less. In addition, the upper limit value of the average major axis/thickness is not particularly limited, but is usually 500 or less.

The average major axis of the metal foil powder can be measured, for example, by using a particle size distribution meter. A thickness of the metal foil powder can be measured, for example, by using an SEM (scanning electron microscope and cross-section observation).

The metal foil powder having the above described shape is obtained by crushing a laminate in which both surfaces of the metal thin film layer having a thickness of 0.01 µm to 0.2 µm are sandwiched between transparent thin film layers each having a thickness of 0.05 µm to 2.0 µm. The term "both surfaces of metal thin film layer" herein refers to a surface having the largest surface area in the metal thin film layer and a surface on an opposite side to the surface.

The thickness of the metal thin film layer can be measured, for example, by using an X-ray fluorescence spectrometer. The thickness of the transparent thin film layer can be measured, for example, by using SEM (scanning electron microscope and cross-section observation).

The metal species constituting the metal thin film layer is preferably a single metal selected from the group consisting of aluminum, silver, gold, nickel, chromium, tin, zinc, indium, titanium, iron and silicon, or an alloy or mixture of two or more selected from the group. Incidentally, the silicon is a semimetal, and shall be included in the metal species constituting the above described metal thin film layer.

As materials for the above described transparent thin film layer, for example, a siloxane-based resin can be used, and a specific example of the siloxane-based resin includes polydimethylsiloxane.

Crushing methods are not particularly limited, but include crushing using a jet mill, a ball mill, a ring roll mill, a hammer mill, a tube mill or the like.

The content of the metal foil powder contained in the second layer is preferably 0.05 to 10 parts by weight, and more preferably 0.1 to 2 parts by weight, with respect to 100 parts by weight of the thermoplastic resin contained in the second layer.

Examples of the thermoplastic resin contained in the second layer include polypropylene, polyethylene, polycarbonate, polystyrene, an acrylonitrile-butadiene-styrene copolymer and an acrylic resin. Among these, the polypropylene is preferable from the viewpoints of chemical resistance, durability and formability.

The above described thermoplastic resins may be used singly or in combinations of two or more.

Specific examples of the above described polypropylene include homopolypropylene, and a copolymer of propylene and an olefin such as ethylene. In particular, the homopolypropylene is preferable for reasons of heat resistance and hardness.

The copolymer may be a block copolymer, a random copolymer, or a mixture thereof.

In the polypropylene, the melt flow rate (Melt Flow Rate: hereinafter referred to as MFR) is preferably 0.5 g/10 minutes or more and 5.0 g/10 minutes or less. The MFR is more preferably 0.5 g/10 minutes or more and 5.0 g/10 minutes or less, and further preferably 2.0 g/10 minutes or more and 4.0 g/10 minutes or less.

When the MFR is less than 0.5 g/10 minutes, the shear stress in the die slip portion at the time of extrusion molding becomes strong, which may accelerate the crystallization and lower the transparency. On the other hand, when the MFR exceeds 5.0 g/10 minutes, the drawdown may become large at the time of thermoforming and the formability may decrease.

The MFR can be measured at a measurement temperature of 230°C and by a load of 2.16 kg in accordance with JIS-K 7210.

When the thermoplastic resin of the second layer is the polypropylene, it is preferable that the polypropylene of the second layer and the polypropylene of the first layer be the same, from the viewpoint of economic efficiency. Specifically, when the thermoplastic resin of the second layer is the polypropylene, it is preferable that the polypropylene be the polypropylene containing the smectic crystal.

The resin composition constituting the second layer may contain a thermoplastic resin and a metal foil powder, and may consists essentially of the thermoplastic resin and the metal foil powder. Here, "essential" means that the total content of the thermoplastic resin and the metal foil powder in the resin composition constituting the second layer is 80 wt% or more, 90 wt% or more, 95 wt% or more, 97 wt% or more, or 99 wt% or more. The resin composition constituting the second layer may consist of only the thermoplastic resin and the metal foil powder.

The resin composition constituting the second layer may contain an additive such as a pigment, an antioxidant, a stabilizer and an ultraviolet absorber in such a range as not to impair the effect of the invention.

A thickness of the second layer may be appropriately determined according to the shape and the size of the structure to be decorated; and is, for example, 20 µm to 900 µm, and is preferably 50 µm to 500 µm.

The third layer is a layer formed of a resin composition containing a thermoplastic resin and a coloring agent.

As the coloring agent contained in the third layer, various known dyes, inorganic pigments, organic pigments and the like can be used. Considering that the coloring agent is previously blended in a raw material resin, it is preferable to adopt a pigment such as an inorganic pigment and an organic pigment as the coloring agent.

Examples of the dye include: an azo dye, an anthraquinone dye, an azoic dye, a naphthol dye, a triphenylmethane dye, a polymethine dye, a metal complex dyestuff, a metal-containing dye, a reactive dye, a direct dye, a bisazo dye, a trisazo dye, a sulfur dye, a sulfur vat dye, a vat dye, an indigoid dye, an ice dye, a mordant dye, an acidic mordant dye, a fluorescent whitening agent, a composite dye, an organic solvent-soluble dye, a basic dye, and a pigment resin printing dye (pigment resin color).

Examples of the inorganic pigment include carbon black, micaceous iron oxide, lead white, red lead, vermilion, ultramarine blue, iron blue, cobalt oxide, titanium dioxide, titanium dioxide-coated mica, strontium chromate, titanium-yellow, titanium black, zinc chromate, iron black, molybdenum red, molybdenum white, litharge, lithopone, emerald green, Guignet's green and cobalt blue.

Examples of the organic pigment include a naphthol-soluble azo pigment, a naphthol-insoluble azo pigment, an oxynaphthoic acid-based azo pigment, a naphthol AS-based soluble azo pigment, a naphthol AS-based insoluble azo pigment, an acetoacetanilide-based soluble azo pigment, an acetoacetanilide-based insoluble azo pigment, a pyrazolone-based azo pigment, a naphthol AS-based non-condensable azo pigment, an acetoacetanilide-based condensation soluble azo pigment, phthalocyanine blue, dyeing lake, isoindolinone, quinacridone, dioxazine violed, perinone, perylene and azulene.

The content of the coloring agent contained in the third layer is preferably 0.5 to 50 parts by weight, and more preferably 3 to 15 parts by weight, with respect to 100 parts by weight of the thermoplastic resin contained in the third layer.

For the thermoplastic resin contained in the third layer, the same resin as the thermoplastic resin of the second layer can be used.

The thermoplastic resin of the third layer and the thermoplastic resin of the second layer may be the same or different, but it is preferable that the thermoplastic resin of the third layer and the thermoplastic resin of the second layer be the same, from the viewpoint of economic efficiency.

The resin composition constituting the third layer may contain the thermoplastic resin and the coloring agent, and may consists essentially of the thermoplastic resin and the coloring agent. Here, "essential" means that the total content of the thermoplastic resin and the coloring agent in the resin composition constituting the third layer is 80 wt% or more, 90 wt% or more, 95 wt% or more, 97 wt% or more, or 99 wt% or more. The resin composition constituting the third layer may consist of only the thermoplastic resin and the coloring agent.

The resin composition constituting the third layer may contain an additive such as an antioxidant, a stabilizer and an ultraviolet absorber in such a range as not to impair the effect of the invention.

A thickness of the third layer may be appropriately determined according to the shape and the size of the structure to be decorated, and is, for example, 5 µm to 900 µm, and is preferably 15 µm to 500 µm.

### <Method for producing laminate>

The laminate of the invention can be produced by producing each layer of the first layer, the second layer and the third layer by known production methods, respectively; and laminating the layers by a known method such as dry lamination or heat lamination. In addition, the laminate of the invention can also be produced by previously producing a part of the first layer, the second layer, the third layer and the like; and laminating the layers by extrusion lamination.

It is preferable that the laminate of the invention be produced from the laminate containing the first layer and the second layer, or the laminate containing the first layer, the second layer and the third layer, by a coextrusion method. Even in the case where the layers of the first layer, the second layer and the third layer are each produced, and are laminated with each other to form a laminate, it is preferable to produce the first layer and the third layer by the extrusion method. When the extrusion method is adopted, the internal temperature of the first layer can be controlled so as to be a crystallization temperature of the polypropylene or less, and the first layer containing the smectic crystal can be produced. However, the crystal of the polypropylene in the first layer becomes the smectic crystal, in the case where the extruded molten resin has been cooled at 80°C per second or more (to which single belt molding method, water cooling method or the like corresponds). In addition, when the extrusion method is adopted, the method can produce a third layer having a larger thickness than a printing method, and can impart the depth of the design to the laminate. In addition, the extrusion method without using a solvent is preferable also from the viewpoint that a bad phenomenon due to the residual solvent does not occur.

Incidentally, when the first layer is produced, for example, by injection molding, it is difficult to obtain the first layer formed of the polypropylene containing the smectic crystal by heating during molding. This is because in the injection molding, an opaque resin is used such as block PP (polypropylene), ABS (acrylonitrile-butadiene-styrene) and PC (polycarbonate)/ABS in consideration of an impact strength of the formed body, and when the first layer is formed of such a resin, the color turns into a white turbid color; and accordingly an intended first layer cannot be obtained in some cases.

When the third layer is produced by the injection molding similarly to the first layer, there is a case where the third layer is discolored depending on the coloring agent, and an intended third layer cannot be obtained.

When the laminate of the invention is produced by a coextrusion method, it is preferable to melt materials of the respective layers and cool the materials down to such a temperature that the internal temperature of the laminate becomes the crystallization temperature or less, at a cooling rate of 80°C/sec or more.

When the polypropylene is cooled from the molten state at a rate of 80°C/sec or more, the polypropylene becomes a structure in which the smectic crystals have a majority. The smectic crystal is an intermediate phase in a metastable state, and is excellent in transparency because each domain size is small. In addition, the smectic crystal is in the metastable state, accordingly the sheet is softened at a low calorific value as compared with that containing the crystallized α crystal, and accordingly has a feature of being excellent in the formability.

In this case, it is preferable to perform quick chilling by using a cooling roll having a surface temperature kept at a dew point or more and 50°C or less. By doing like this, the whitening of the laminate can be further prevented.

In addition, the laminate of the invention can be produced by using an apparatus including a mirror-finished endless belt wound around a plurality of cooling rolls and a mirror-finished cooling roll, and having surface temperatures of the mirror-finished endless belt and the mirror-finished cooling roll kept at a dew point or more and 50°C or less.

In this case, the laminate is produced by introducing molten materials of the respective layers in between the mirror-finished cooling roll and the mirror-finished endless belt by a T-die extruder, pressure welding and forming the materials into a sheet shape, spraying cooling water having a temperature lower than the surface temperature of the belt onto the mirror-finished endless belt, and quickly chilling the belt.

It is preferable to form the obtained laminate into a nonplanar shape to be provided on at least a part of a base body. Even if the laminate is formed into a complicated shape, the whitening of the sheet can be prevented, and the laminate can be adequately decoratively molded so that the appearance is not impaired even a molded article has a complicated shape.

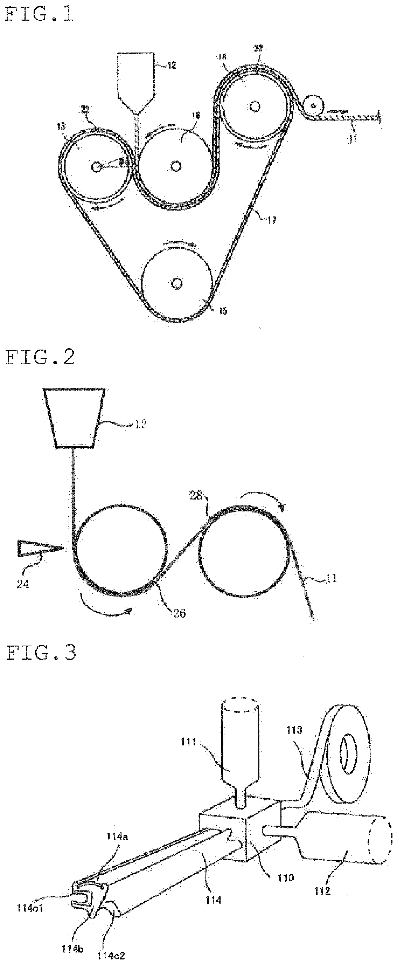

Figure 1 shows a schematic structural view of one example of a manufacturing apparatus for producing the laminate of the invention.

The manufacturing apparatus shown in Figure 1 includes a T die 12 of the extruder, a first cooling roll 13, a second cooling roll 14, a third cooling roll 15, a fourth cooling roll 16, and a metallic endless belt 17.

One embodiment of a method for producing a laminated sheet (laminate) 11 by the quick chilling, by using thus structured manufacturing apparatus, will be described below.

Firstly, temperatures of each of the cooling rolls 13, 14, 15 and 16 are controlled in advance so that surface temperatures of the metallic endless belt 17 and the fourth cooling roll 16 which come in direct contact with the extruded molten resin and cool the molten resin are kept at a dew point or more, and at 50°C or less and preferably 30°C or less.

Here, when the surface temperatures of the fourth cooling roll 16 and the metallic endless belt 17 are the dew point or less, dew condensation occurs on the surfaces, and uniform film formation may become difficult. On the other hand, when the surface temperatures are higher than 50°C, the transparency of the obtained laminated sheet 11 is lowered, and also the α crystal increases; and the laminated sheet may become difficult to be thermoformed. Accordingly, the surface temperature is, for example, 20°C

Next, the molten resin (which does not contain a nucleating agent) that has been extruded from the T die 12 of the extruder is sandwiched between the metallic endless belt 17 and the fourth cooling roll 16, on the first cooling roll 13. In this state, the molten resin is pressure welded by the first and fourth cooling rolls 13 and 16, and at the same time, is quickly chilled at 14°C.

At this time, an elastic material 22 is compressed and elastically deformed by a pressing force applied between the first cooling roll 13 and the fourth cooling roll 16.

A quickly chilled sheet on a portion in which this elastic material 22 is elastically deformed, specifically, on an arc portion which corresponds to a central angle θ1 of the first cooling roll 13 is pressure welded into a sheet shape by each of the cooling rolls 13 and 16. The surface pressure at this time is usually 0.1 MPa or more and 20 MPa or less.

The sheet which has been pressure welded as described above and has been sandwiched between the fourth cooling roll 16 and the metallic endless belt 17 is subsequently pressed into a sheet shape while being sandwiched between the metallic endless belt 17 and the fourth cooling roll 16 on an arc portion which corresponds to substantially a lower half circumference of the fourth cooling roll 16. The surface pressure at this time is usually 0.01 MPa or more and 0.5 MPa or less.

The sheet which is pressure welded into the sheet shape and cooled by the fourth cooling roll 16 as described above and is then brought into close contact with the metallic endless belt 17 is moved onto the second cooling roll 14 along with the rotation of the metallic endless belt 17. Here, the sheet which has been guided by a peeling roll 21 and pressed toward the second cooling roll 14 side is pressed into the sheet shape by the metallic endless belt 17, on an arc portion which corresponds to substantially an upper half circumference of the second cooling roll 14, similarly to the previous description, and is cooled again at a temperature of 30°C or less. The surface pressure at this time is usually 0.01 MPa or more and 0.5 MPa or less.

The laminated sheet which has been cooled on the second cooling roll 14 is wound up at a predetermined speed by a winding roll (not shown).

### <Formed body and method for producing formed body>

The formed body of the invention can be obtained by molding the laminate of the invention.

As for the molding method, it is preferable to use in-mold molding, insert molding, covering molding, or profile extrusion molding.

The in-mold molding is a method for obtaining a formed body by installing the laminate in a mold, and molding the laminate into a desired shape with a pressure of a resin for molding, which is supplied into the mold.

As for the in-mold molding, it is preferable to place the laminate on the mold and supply the resin for molding to integrate each other.

The insert molding is a method for obtaining a formed body, by preliminarily shaping a shaped body to be installed in the mold, and filling the shape with a resin for molding. A more complicated shape can be produced.

As for the insert molding, it is preferable to shape the laminate so as to conform to the mold, place the shaped laminate on the mold, and supply the resin for molding to integrate each other.

It is preferable to provide a shape (preliminary shaping) so that the laminate conforms to the mold, by vacuum molding, compressed air molding, vacuum pressure forming, press molding, plug assist molding or the like.

It is preferable that the resin for molding be a moldable thermoplastic resin. Specific examples include polypropylene, polyethylene, polycarbonate, an acrylonitrile-styrene-butadiene copolymer and an acrylic polymer, but are not limited to those. An inorganic filler such as fiber and talc may be added thereto.

It is preferable that the supply be performed by injection, and the pressure is preferably 5 MPa or more and 120 MPa or less.

The mold temperature is preferably 20°C or more and 90°C or less.

As for the cover molding, it is preferable to arrange a core material in a chamber box, arrange a laminate above the core material, depressurize the inside of the chamber box, heat and soften the laminate, bring the laminate into contact with the upper surface of the core material, press the heated and softened laminate to the core material, and cover the core material with the laminate.

It is preferable to bring the laminate into contact with the upper surface of the core material, after heating and softening.

As for the pressing, it is preferable to press an opposite side to the core material of the laminate in the chamber box, in such a state a side coming in contact with the core material of the laminate is depressurized.

The core material may be convex or concave, and examples thereof include a resin, metal and ceramic which each have a three-dimensional curved surface. Examples of the resin include a similar resin to those which are used in the above described molding.

Specifically, it is preferable to use a chamber box composed of upper and lower molding chambers which can be separated from each other.

Firstly, the core material is placed and set on a table in the lower molding chamber. The laminate of the invention, which is an object to be molded, is fixed on the upper surface of the lower molding chamber by a clamp. At this time, the insides of the upper and lower molding chambers are in the atmospheric pressure.

Next, the upper molding chamber is let down, the upper and lower molding chambers are joined, and the inside of the chamber box is made a confined state. Both the insides of the upper and lower molding chambers are converted from the atmospheric pressure state to a vacuum suction state, by a vacuum tank.

After the insides of the upper and lower molding chambers have been converted to a vacuum suction state, the decorated sheet is heated by a heater being turned on. Next, the table in the lower molding chamber is raised while the insides of the upper and lower molding chambers are kept in a vacuum state.

Next, the vacuum in the upper molding chamber is released, and the atmospheric pressure is introduced thereto; and thereby the laminate of the invention which is an object to be molded is pressed against the core material and is overlaid (molded). Incidentally, it is also possible to bring the laminate of the invention, which is the object to be molded, into close contact with the core material with a greater force, by supplying compressed air into the upper molding chamber.

After the overlay has been completed, the heater is turned off, the vacuum in the lower molding chamber is also released and is returned to the atmospheric pressure state, the upper molding chamber is raised, and a product is taken out in which the decorated printed laminate covers the core material as a skin material.

In the profile extrusion molding, when extrusion-molding a molding, a profile extruder extrusion-molds the molding while supplying the laminate of the invention to the die. It is possible to obtain a formed body (molding) in which the laminate and the decorative tape for molding are integrated with each other by thermal fusion bonding, by the profile extrusion molding.

In the obtained molding, the decorative tape for the molding and the laminate of the invention are integrated with each other, and the laminate of the invention functions as a backing material for the decorative tape for the molding.

A known tape can be used as the decorative tape for the molding, which is used for molding, and the decorative tape is, for example, a tape which has a resin layer formed of polyester or a fluororesin and a metal layer. The laminate of the invention may be fusion bonded to the metal layer side of the tape.

Figure 3 is a schematic structural view showing one example of a manufacturing apparatus for carrying out the profile extrusion molding.

An extruder 111 for supplying a laminate which forms lip portions 114c1 and 114c2 of the molding 114, and an extruder 112 for supplying a laminate which forms a main molding portion 114b of the molding 114 are affixed to a die 110. Furthermore, a decorative tape 113 for the molding is supplied to the die 110, and becomes a brilliant portion 114a of the molding 114 which is a product.

It is preferable that the polypropylene in a portion corresponding to the first layer of the laminate in the formed body obtained by using the laminate of the invention be polypropylene having an isotactic pentad fraction of 85 mol% to 99 mol%.

Similarly, it is preferable that the polypropylene in the portion corresponding to the first layer of the laminate in the formed body obtained by using the laminate of the invention be polypropylene having a crystallization speed at 130°C of 2.5 min⁻¹ or less. The lower limit value is not particularly limited, but is usually 0.01 min⁻¹ or more.

Even after the laminate has been formed into the formed body, the portion corresponding to the first layer of the laminate can be specified by using a phase microscope or the like.

### Examples

Hereafter, the invention will be described with reference to Examples and Comparative Examples. However, the invention is not limited to these Examples.

### Example 1

In order to produce the laminate, the following materials were prepared.
- Polypropylene of first layer: homopolypropylene (trade name: Prime Polypro^{™} F-133A, manufactured by Prime Polymer Co., Ltd., and melt flow index: 2.8 g/10 min)
- Thermoplastic resin of second layer: homopolypropylene (trade name: Prime Polypro^{™} F-133A, manufactured by Prime Polymer Co., Ltd., and melt flow index: 2.8 g/10 min)
- Metal foil powder of second layer: aluminum flattened piece (trade name: LG neo #200, manufactured by Oike Imaging Inc., average major axis: 60 µm, and ratio of average major axis/thickness: 30) having a laminate structure in which both surfaces of a metal thin film layer are sandwiched between transparent thin film layers formed of a siloxane-based resin
- Thermoplastic resin of third layer: homopolypropylene (trade name: Prime Polypro^{™} F-133A, manufactured by Prime Polymer Co., Ltd., and melt flow index: 2.8 g/10 min)
- Coloring agent of third layer: black master batch (trade name: PPM91291 BLACK AL #94, manufactured by Tokyo Printing Ink Mfg. Co., Ltd.)

The average major axis of the metal foil powder was measured by using a particle size distribution meter. A thickness of the metal foil powder was measured by using an SEM (scanning electron microscope and cross-section observation).

The melt flow index was measured at a measurement temperature of 230°C and by a load of 2.16 kg in accordance with JIS-K 7210.

A laminate formed of four layers of first layer (thickness of 48 µm)/second layer (thickness of 125 µm)/third layer (thickness of 96 µm)/first layer (thickness of 35 µm) was produced by a coextrusion method, by using a manufacturing apparatus shown in Figure 1, under the manufacturing conditions shown below.

### [Manufacturing conditions]

- Blending of second layer: 99.5 wt% of homopolypropylene + 0.5 wt% of metal foil powder
- Blending of third layer: 90 wt% of homopolypropylene + 10 wt% of black master batch
- Diameter of extruder for first layer: 65 mm
- Diameter of extruder for second layer: 75 mm
- Diameter of extruder for third layer: 50 mm
- Width of T die: 900 mm
- Take-up speed of laminated sheet: 6 m/minute
- Surface temperatures of cooling roll and metallic endless belt: 20°C
- Cooling rate: 10,800°C/minute

As for the thickness of each layer, a cross section was cut with a sliding microtome HM 340E (manufactured by Micron Technology), the cross section was observed under magnification by an optical microscope, and the thickness in a depth direction of each of the layers was measured.

The obtained laminate was subjected to the following evaluations. The results are shown in Table 1.

### (1) Isotactic pentad fraction

An isotactic pentad fraction of the polypropylene used for the first layer was measured through the evaluation for a ¹³C-NMR spectrum. Specifically, the isotactic pentad fraction was measured according to the belonging of peaks, which has been proposed by A. Zambelli (A. Zambelli) et al., in "Macromolecules, 8, 687 (1975)" and by using the following apparatus, conditions and computation expression.

### [Apparatus and conditions]

Apparatus: JNM-EX400 Model ¹³C-NMR apparatus manufactured by JEOL Ltd.
Method: proton complete decoupling method, Concentration: 220 mg/ml
Solvent: mixed solvent of 1,2,4-trichlorobenzene and heavy benzene at 90:10 (by volume ratio)
Temperature: 130°C
Pulse width: 45°
Pulse repetition time: 4 seconds
Integration: 10000 times

### [Computation expression]

Isotactic pentad fraction [mmmm] = m/S×100
S: signal intensity of carbon atoms in side chain methyls of all propylene units
m: mesopentad linkage: 21.7 to 22.5 ppm

### (2) Crystallization speed

The crystallization speed of the polypropylene used for the first layer was measured by using a differential scanning calorimeter (DSC) (product name "Diamond DSC", manufactured by PerkinElmer Co., Ltd.). Specifically, the polypropylene was heated from 50°C to 230°C at 10°C/min, held at 230°C for 5 minutes, cooled from 230°C to 130°C at 80°C/min, and then held at 130°C to be crystallized. From the time point when the temperature reached 130°C, the measurement for the change of the heat quantity was started, and a DSC curve was obtained. From the obtained DSC curve, the crystallization speed was determined according to the following procedures (i) to (iv).
(i) A baseline was determined to be a straight line which approximates the change of the heat quantity from the time point of 10 times the time from the start of measurement to the peak top to the time point of 20 times.
(ii) The intersection of a tangent line having an inclination at the inflection point of a peak and the baseline was determined, and the crystallization starting time and ending time were determined.
(iii) A time period from the obtained crystallization starting time to the peak top was measured as the crystallization time period.
(iv) The crystallization speed was determined from the inverse number of the obtained crystallization time period.

### (3) Crystalline form

The crystalline form of the polypropylene in the first layer was checked by wide angle X-ray diffraction (WAXD: Wide-Angle X-ray Diffraction), with reference to the method (Macromolecules, 38, 8749, 2005) which T. Konishi, et al. used.

As for the analysis, the peaks of the amorphous phase, the intermediate phase and the crystalline phase on the X-ray diffraction profile were separated, respectively, and an abundance ratio was determined from an area of the peak which belongs to each phase.

### (4) Sense of brightness of laminate

The sense of brightness of the laminate was visually evaluated by the following criteria.
Good: Excellent in sense of brightness having depth of design
Fair: Excellent in sense of brightness, but slightly inferior to Good, because light passes through
Poor: Inferior in sense of brightness due to cloudiness and whitening

### (5) Depth of design of laminate

The depth of the design of the laminate was visually evaluated by the following criteria.
Good: There is a depth of a design, and the design is stereoscopically observed.
Poor: There is not a depth of the design, and the design is planarly observed.

The obtained laminate was thermoformed by vacuum pressure forming using a vacuum pressure forming machine (FM-3M/H, manufactured by Minos Co., Ltd.), and a formed body was obtained. At the time of the thermoforming, in order to thermoform the laminate while maintaining the microstructure of the polypropylene crystal, the heating condition was set so that the polypropylene crystal of the first layer did not become the melting point or more. The sense of brightness and the depth of the design of the obtained formed body were evaluated in the same way to the case of the laminate. The results are shown in Table 1.

In addition, the state of whitening after the laminate has been formed into a formed body was evaluated by the following criteria. The results are shown in Table 1.

Good: The first layer is not whitened, and the sense of brightness and the depth of the design are equivalent to those before molding.

Poor: The first layer is whitened, and the sense of brightness and the depth of the design are lowered as compared with before molding.

### Example 2

A laminate and a formed body were produced and evaluated in the same way to that in Example 1, except that a white master batch (SCPPM 10E658 white (Z), manufactured by SANKYO CHEMICAL CO., LTD.) was used as the coloring agent of the third layer, and the thicknesses of the first layer and the third layer were changed to thicknesses in Table 1. The results are shown in Table 1.

### Example 3

A laminate and a formed body were produced and evaluated in the same way to that in Example 1, except that a blue master batch (PPM 5BG132 BLUE, manufactured by Tokyo Printing Ink Mfg. Co., Ltd.) was used as the coloring agent of the third layer, and the thicknesses of the first layer, the second layer and the third layer were changed to thicknesses in Table 1. The results are shown in Table 1.

### Example 4

A laminate and a formed body were produced and evaluated in the same way to that in Example 1, except that a red master batch (PPM 4BG148 RED, manufactured by Tokyo Printing Ink Mfg. Co., Ltd.) was used as the coloring agent of the third layer, and the thicknesses of the first layer, the second layer and the third layer were changed to thicknesses in Table 1. The results are shown in Table 1.

### Example 5

A laminate and a formed body were produced and evaluated in the same way to that in Example 1, except that an aluminum flattened piece (trade name: LG neo #500, manufactured by Oike Imaging Inc., average major axis: 15 µm, and ratio of average major axis/thickness: 7.5) having a laminate structure in which both surfaces of a metal thin film layer are sandwiched between transparent thin film layers formed of a siloxane-based resin was used as the metal foil powder of the second layer, and that the thicknesses of the first layer, the second layer and the third layer were changed to thicknesses in Table 1. The results are shown in Table 1.

The average major axis of the metal foil powder and the thickness of the metal foil powder were measured in the same way to those of LG neo #200.

### Example 6

A laminate and a formed body were produced and evaluated in the same way to that in Example 1, except that the thickness of the laminate was changed to the first layer (thickness of 101 µm)/second layer (thickness of 300 µm)/third layer (thickness of 215 µm)/first layer (thickness of 80 µm). The results are shown in Table 1.

### Example 7

A laminate and a formed body were produced and evaluated in the same way to that in Example 5, except that the thickness of the laminate was changed to the first layer (thickness of 110 µm)/second layer (thickness of 290 µm)/third layer (thickness of 211 µm)/first layer (thickness of 83 µm). The results are shown in Table 1.

### Example 8

A laminate and a formed body were produced and evaluated in the same way to that in Example 1, except that the laminate is structured so as to be formed of two layers of the first layer (thickness of 61 µm)/the second layer (thickness of 163 µm) without having the third layer formed therein. The results are shown in Table 1.

### Comparative Example 1

For producing the laminate, the following materials were prepared.
- Thermoplastic resin of first layer: homopolypropylene (trade name: Prime Polypro^{™} F-133A, manufactured by Prime Polymer Co., Ltd., and melt flow index: 2.8 g/10 min)
- Thermoplastic resin of second layer: homopolypropylene (trade name: Prime Polypro^{™} F-133A, manufactured by Prime Polymer Co., Ltd., and melt flow index: 2.8 g/10 min)
- Metal foil powder of second layer: aluminum powder (trade name: LG neo #200 manufactured by Oike Imaging Inc., average major axis: 60 µm, and ratio of average major axis/thickness: 30)
- Thermoplastic resin of third layer: homopolypropylene (trade name: Prime Polypro^{™} F-133A, manufactured by Prime Polymer Co., Ltd., and melt flow index: 2.8 g/10 min)
- Coloring agent of third layer: black master batch (trade name: PPM 91291 BLACK AL #94, manufactured by Tokyo Printing Ink Mfg. Co., Ltd.)

A laminate formed of four layers of first layer (thickness of 18 µm)/second layer (thickness of 240 µm)/first layer (thickness of 21 µm)/third layer (thickness of 44 µm) was produced by using a manufacturing apparatus shown in Figure 2 (while in Figure 2, reference numeral 24 denotes air knife, and reference numerals 26 and 28 denote cooling rolls) under the manufacturing conditions shown below.

### [Manufacturing conditions]

- Blending of second layer: 99.5 wt% of homopolypropylene + 0.5 wt% of metal foil powder
- Blending of third layer: 90 wt% of homopolypropylene + 10 wt% of black master batch
- Diameter of extruder for first layer: 30 mm
- Diameter of extruder for second layer: 40 mm
- Diameter of extruder for third layer: 30 mm
- Width of T die: 350 mm
- Take-up speed of laminated sheet: 1.6 m/minute
- Surface temperature of cooling roll: 80°C
- Cooling rate: 1154°C/minute

The obtained laminate was subjected to evaluations similar to those in Example 1. In addition, a formed body was produced from the laminate obtained in the same way to that in Example 1 and was evaluated. The results are shown in Table 1.

### Comparative Example 2

A laminate and a formed body were produced and evaluated in the same way to that in Comparative Example 1, except that the laminate is structured so as to be formed of three layers of the first layer (thickness of 107 µm)/the second layer (thickness of 277 µm)/the first layer (73 µm). The results are shown in Table 1.

### Comparative Example 3

A laminate and a formed body were produced and evaluated in the same way to that in Comparative Example 1, except that 1.5 wt% of a sorbitol-based nucleating agent (Rikemaster FC-1, manufactured by RIKEN VITAMIN CO., LTD.) was added to polypropylene of each layer of the first layer, the second layer and the third layer as a nucleating agent, and the thicknesses of the first layer, the second layer and the third layer were changed to thicknesses in Table 1. The results are shown in Table 1.

Incidentally, the value of the crystallization speed of the propylene in Comparative Example 3 is a value obtained from the evaluation of a composition which further contained the nucleating agent in the propylene.

### Comparative Example 4

A laminate and a formed body were produced and evaluated in the same way to that in Comparative Example 2, except that 1.5 wt% of a sorbitol-based nucleating agent (Rikemaster FC-1, manufactured by RIKEN VITAMIN CO., LTD.) was added to polypropylene of each layer of the first layer and the second layer as a nucleating agent, and the thicknesses of the first layer and the second layer were changed to thicknesses in Table 1. The results are shown in Table 1.

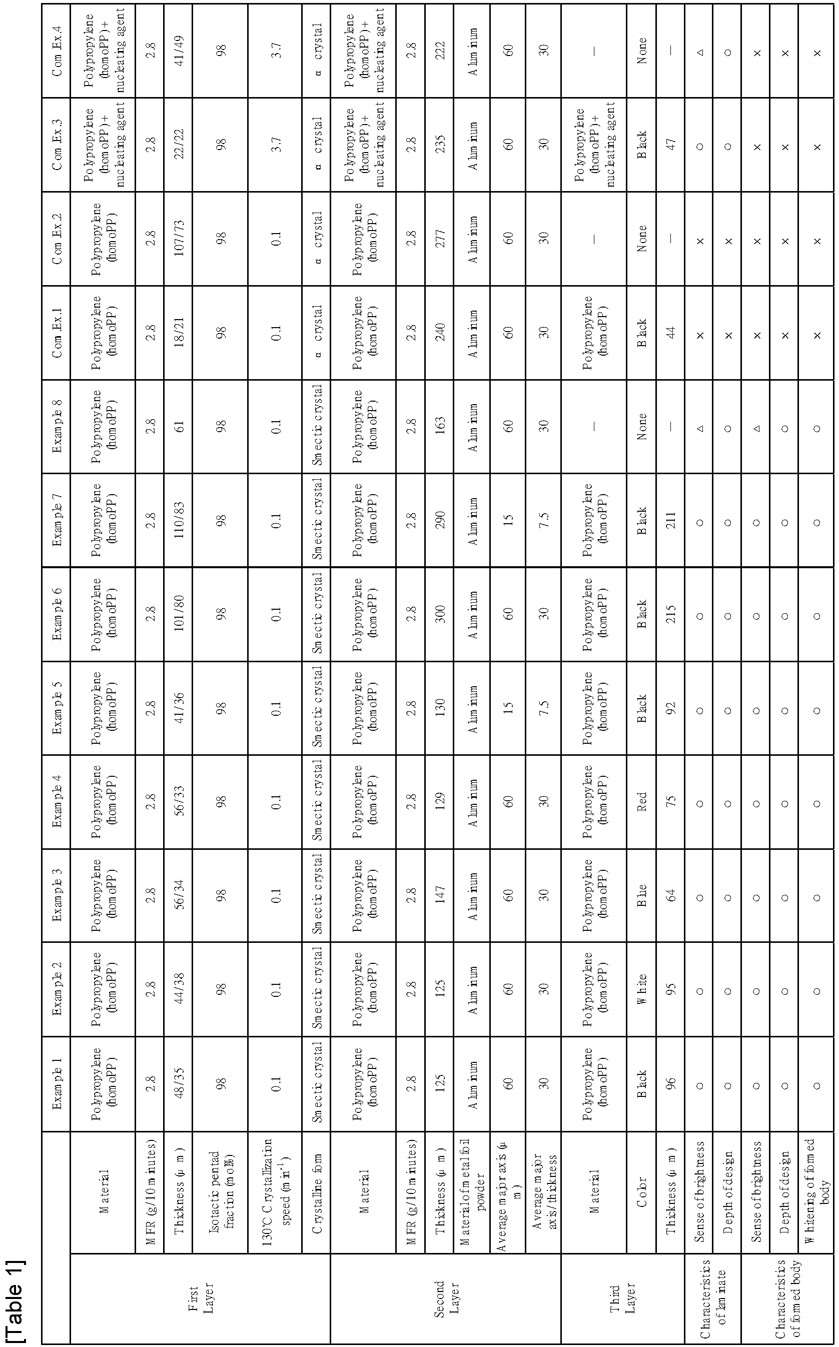

### Industrial Applicability

The formed body obtained from the laminate of the invention and the formed body obtained by the method of the invention can be used as a decorated sheet which substitutes for the painting, in housings in a wide variety of fields such as transportation equipment (automobiles, motorcycles and the like), household equipment, building materials, and home electric appliances.

## Claims

1. A laminate comprising, in the following order:
a first layer comprising polypropylene containing a smectic crystal; and
a second layer comprising a resin composition containing a thermoplastic resin and a metal foil powder, wherein
the metal foil powder is a flattened piece having a laminate structure in which both surfaces of a metal thin film layer are each covered with a transparent thin film layer.

2. A laminate according to claim 1, additionally comprising in the order first layer - second layer - third layer,
a third layer comprising a resin composition containing a thermoplastic resin and a coloring agent.

3. The laminate according to claim 2, wherein the thermoplastic resin of the third layer includes one or more selected from the group consisting of polypropylene, polyethylene, polycarbonate, polystyrene, an acrylonitrile-butadiene-styrene copolymer and an acrylic resin.

4. The laminate according to any of claims 1 to 3, wherein
the metal foil powder is an indefinitely shaped flattened piece having a laminate structure in which both of the surfaces of the metal thin film layer having a thickness of 0.01 µm to 0.2 µm are each covered with the transparent thin film layer having a thickness of 0.05 µm to 2.0 µm, wherein
the metal thin film layer comprises a single metal selected from the group consisting of aluminum, silver, gold, nickel, chromium, tin, zinc, indium, titanium, iron and silicon, or an alloy or mixture of two or more selected from the group, and
on surfaces of the indefinitely shaped flattened pieces, an average major axis is 10 µm or more, which is an average value of longest lengths from an end to an end, and a ratio of the average major axis to the thickness (average major axis/thickness) is 2.5 or more.

5. The laminate according to any of claims 1 to 4, wherein the polypropylene of the first layer is polypropylene having an isotactic pentad fraction of 85 mol% to 99 mol%.

6. The laminate according to any of claims 1 to 5, wherein the polypropylene of the first layer is polypropylene having a crystallization speed of 2.5 min⁻¹ or less at 130°C, measured by using a differential scanning calorimeter according to the description.

7. The laminate according to any of claims 1 to 6, wherein the thermoplastic resin of the second layer contains one or more selected from the group consisting of polypropylene, polyethylene, polycarbonate, polystyrene, an acrylonitrile-butadiene-styrene copolymer and an acrylic resin.

8. A formed body produced by using the laminate according to any of claims 1 to 7.

9. The formed body according to claim 8, wherein the polypropylene of the first layer of the formed body is polypropylene having an isotactic pentad fraction of 85 mol% to 99 mol%.

10. The formed body according to claim 8 or 9, wherein the polypropylene of the first layer of the formed body is polypropylene having a crystallization speed of 2.5 min⁻¹ or less at 130°C, measured by using a differential scanning according to the description.

11. The formed body according to any of claims 8 to 10 which is produced by the method of claim 14.

12. The formed body according to any of claims 8 to 10 which is produced the method of claim 16.

13. The formed body according to any of claims 8 to 10 which is produced by the method of claim 17.

14. A method for producing a formed body comprising: placing the laminate according to any of claims 1 to 7 on a mold; and supplying a resin for molding to integrate each other.

15. A method for producing a formed body comprising: shaping the laminate according to any of claims 1 to 7 so as to conform to a mold; placing the shaped laminate on the mold; and supplying a resin for molding to integrate each other.

16. A method for producing a formed body comprising:
arranging a core material in a chamber box;
arranging the laminate according to any of claims 1 to 7 above the core material;
depressurizing an inside of the chamber box;
heating and softening the laminate; and
pressing the heated and softened laminate against the core material to cover the core material.

17. A method for producing a formed body comprising: supplying the laminate according to any of claims 1 to 7 to a die of a profile extruder when extruding and molding a molding with the profile extruder; and integrating the laminate with a main body of the molding by thermal fusion bonding.

## Patentansprüche

1. Laminat, umfassend in der folgenden Reihenfolge
eine erste Schicht aus Polypropylen, die einen smektischen Kristall enthält; und
eine zweite Schicht, umfassend eine Harzzusammensetzung, die ein thermoplastisches Harz und ein Metallfolienpulver enthält, wobei
das Metallfolienpulver ein abgeflachtes Stück mit einer Laminatstruktur ist, in der beide Oberflächen einer Metall-Dünnfilmschicht jeweils mit einer transparenten Dünnfilmschicht bedeckt sind.

2. Laminat nach Anspruch 1, zusätzlich umfassend in der Reihenfolge erste Schicht - zweite Schicht - dritte Schicht,
eine dritte Schicht, die eine Harzzusammensetzung umfasst, die ein thermoplastisches Harz und ein Färbemittel enthält.

3. Laminat nach Anspruch 2, wobei das thermoplastische Harz der dritten Schicht eines oder mehrere aus der Gruppe bestehend aus Polypropylen, Polyethylen, Polycarbonat, Polystyrol, einem Acrylnitril-Butadien-Styrol-Copolymer und einem Acrylharz enthält.

4. Laminat nach einem der Ansprüche 1 bis 3, wobei
das Metallfolienpulver ein unbestimmt geformtes, abgeflachtes Stück mit einer Laminatstruktur ist, in der beide Oberflächen der Metall-Dünnfilmschicht mit einer Dicke von 0,01 µm bis 0,2 µm jeweils mit der transparenten Dünnfilmschicht mit einer Dicke von 0,05 µm bis 2,0 µm bedeckt sind, wobei
die Metall-Dünnfilmschicht ein einzelnes Metall, ausgewählt aus der Gruppe bestehend aus Aluminium, Silber, Gold, Nickel, Chrom, Zinn, Zink, Indium, Titan, Eisen und Silizium, oder eine Legierung oder Mischung von zwei oder mehr, ausgewählt aus der Gruppe, umfasst, und
auf den Oberflächen der unbestimmt geformten abgeflachten Stücke eine durchschnittliche Hauptachse 10 µm oder mehr beträgt, was ein Durchschnittswert der längsten Längen von einem Ende zu einem Ende ist, und ein Verhältnis der durchschnittlichen Hauptachse zur Dicke (durchschnittliche Hauptachse/Dicke) 2,5 oder mehr beträgt.

5. Laminat nach einem der Ansprüche 1 bis 4, wobei das Polypropylen der ersten Schicht Polypropylen mit einem isotaktischen Pentaden-Anteil von 85 mol% bis 99 mol% ist.

6. Laminat nach einem der Ansprüche 1 bis 5, wobei das Polypropylen der ersten Schicht ein Polypropylen mit einer Kristallisationsgeschwindigkeit von 2,5 min⁻¹ oder weniger bei 130°C ist, gemessen unter Verwendung eines Differentialscanningkalorimeters gemäß der Beschreibung.

7. Laminat nach einem der Ansprüche 1 bis 6, wobei das thermoplastische Harz der zweiten Schicht eines oder mehrere aus der Gruppe bestehend aus Polypropylen, Polyethylen, Polycarbonat, Polystyrol, einem Acrylnitril-Butadien-Styrol-Copolymer und einem Acrylharz enthält.

8. Formkörper, hergestellt unter Verwendung des Laminats nach einem der Ansprüche 1 bis 7.

9. Formkörper nach Anspruch 8, wobei das Polypropylen der ersten Schicht des Formkörpers Polypropylen mit einem isotaktischen Pentaden-Anteil von 85 mol% bis 99 mol% ist.

10. Formkörper nach Anspruch 8 oder 9, wobei das Polypropylen der ersten Schicht des Formkörpers ein Polypropylen mit einer Kristallisationsgeschwindigkeit von 2,5 min⁻¹ oder weniger bei 130°C ist, gemessen unter Verwendung eines Differentialscanningkalorimeters gemäß der Beschreibung.

11. Formkörper nach einem der Ansprüche 8 bis 10, der nach dem Verfahren des Anspruchs 14 hergestellt ist.

12. Formkörper nach einem der Ansprüche 8 bis 10, der nach dem Verfahren des Anspruchs 16 hergestellt ist.

13. Formkörper nach einem der Ansprüche 8 bis 10, der nach dem Verfahren des Anspruchs 17 hergestellt ist.

14. Verfahren zur Herstellung eines Formkörpers, umfassend: Anordnen des Laminats nach einem der Ansprüche 1 bis 7 auf einer Form; und Zuführen eines Harzes zum Formen, um sich gegenseitig zu integrieren.

15. Verfahren zur Herstellung eines Formkörpers, umfassend: Formen des Laminats nach einem der Ansprüche 1 bis 7, so dass es sich an eine Form anpasst; Auflegen des geformten Laminats auf die Form; und Zuführen eines Harzes zum Formen, um sich gegenseitig zu integrieren.

16. Verfahren zur Herstellung eines Formkörpers, umfassend:
Anordnen eines Kernmaterials in einem Kammerkasten;
Anordnen des Laminats nach einem der Ansprüche 1 bis 7 über dem Kernmaterial;
Unterdrucksetzen eines Innenraums des Kammerkastens;
Erhitzen und Erweichen des Laminats; und
Pressen des erhitzten und erweichten Laminats gegen das Kernmaterial, um das Kernmaterial zu bedecken.

17. Verfahren zur Herstellung eines Formkörpers, umfassend: Zuführen des Laminats nach einem der Ansprüche 1 bis 7 zu einer Düse eines Profilextruders beim Extrudieren und Formen eines Formteils mit dem Profilextruder; und Integrieren des Laminats mit einem Hauptkörper des Formteils durch thermisches Schmelzverbinden.

## Revendications

1. Un stratifié comprenant, dans l'ordre suivant :
une première couche comprenant du polypropylène contenant un cristal smectique ; et
une deuxième couche comprenant une composition de résine contenant une résine thermoplastique et une poudre de feuille métallique, dans laquelle
la poudre de feuille métallique est une pièce aplatie ayant une structure stratifiée dans laquelle les deux surfaces d'une couche de film mince métallique sont chacune couverte d'une couche de film mince transparent.

2. Stratifié selon la revendication 1, comprenant en outre dans l'ordre : première couche - deuxième couche - troisième couche,
une troisième couche comprenant une composition de résine contenant une résine thermoplastique et un agent colorant.

3. Stratifié selon la revendication 2, dans lequel la résine thermoplastique de la troisième couche comprend un ou plusieurs éléments choisis dans le groupe constitué par le polypropylène, le polyéthylène, le polycarbonate, le polystyrène, un copolymère acrylonitrile-butadiène-styrène et une résine acrylique.

4. Stratifié selon l'une quelconque des revendications 1 à 3, dans lequel
la poudre de feuille métallique est une pièce aplatie de forme indéfinie ayant une structure stratifiée dans laquelle les deux surfaces de la couche de film mince métallique ayant une épaisseur de 0,01 µm à 0,2 µm sont chacune recouvertes de la couche de film mince transparent ayant une épaisseur de 0,05 µm à 2,0 µm, dans laquelle
la couche de film mince métallique comprend un seul métal choisi dans le groupe constitué par l'aluminium, l'argent, l'or, le nickel, le chrome, l'étain, le zinc, l'indium, le titane, le fer et le silicium, ou un alliage ou un mélange de deux ou plusieurs métaux choisis dans le groupe, et sur les surfaces des pièces aplaties de forme indéfinie, un grand axe moyen est de 10 µm ou plus, ce qui est une valeur moyenne des plus grandes longueurs d'une extrémité à l'autre extrémité, et un rapport du grand axe moyen à l'épaisseur (grand axe moyen/épaisseur) est de 2,5 ou plus.

5. Stratifié selon l'une quelconque des revendications 1 à 4, dans lequel le polypropylène de la première couche est un polypropylène ayant une fraction de pentade isotactique de 85 % en moles à 99 % en moles.

6. Le stratifié selon l'une quelconque des revendications 1 à 5, dans lequel le polypropylène de la première couche est un polypropylène ayant une vitesse de cristallisation de 2,5 min⁻¹ ou moins à 130°C, mesurée selon la description en utilisant un calorimètre différentiel à balayage.

7. Stratifié selon l'une quelconque des revendications 1 à 6, dans lequel la résine thermoplastique de la deuxième couche contient un ou plusieurs éléments choisis dans le groupe constitué par le polypropylène, le polyéthylène, le polycarbonate, le polystyrène, un copolymère acrylonitrile-butadiène-styrène et une résine acrylique.

8. Corps formé produit en utilisant le stratifié selon l'une quelconque des revendications 1 à 7.

9. Corps formé selon la revendication 8, dans lequel le polypropylène de la première couche du corps formé est un polypropylène ayant une fraction de pentade isotactique de 85 % en moles à 99 % en moles.

10. Corps formé selon la revendication 8 ou 9, dans lequel le polypropylène de la première couche du corps formé est un polypropylène ayant une vitesse de cristallisation de 2,5 min⁻¹ ou moins à 130°C, mesurée selon la description en utilisant un calorimètre à balayage différentiel.

11. Corps formé selon l'une quelconque des revendications 8 à 10, qui est produit par le procédé de la revendication 14.

12. Corps formé selon l'une quelconque des revendications 8 à 10, qui est produit par le procédé de la revendication 16.

13. Corps formé selon l'une quelconque des revendications 8 à 10, qui est réalisé par le procédé de la revendication 17.

14. Procédé de production d'un corps formé comprenant: la mise en place du stratifié selon l'une quelconque des revendications 1 à 7 sur un moule; et la fourniture d'une résine pour le moulage afin qu'ils s'intègrent les uns aux autres.

15. Procédé de production d'un corps formé comprenant: la mise en forme du stratifié selon l'une quelconque des revendications 1 à 7 de manière à se conformer à un moule; le placement du stratifié mis en forme sur le moule; et la fourniture d'une résine pour le moulage afin qu'ils s'intègrent les uns aux autres.

16. Procédé de production d'un corps formé comprenant:
Arranger un matériau de noyau dans un caisson de chambre ;
disposer le stratifié selon l'une quelconque des revendications 1 à 7 au-dessus du matériau de noyau ;
dépressuriser de l'intérieur du caisson ;
chauffer et ramollir le stratifié ; et
presser le stratifié chauffé et ramolli contre le matériau du noyau pour couvrir le matériau du noyau.

17. Procédé de production d'un corps formé comprenant: fournir le stratifié selon l'une quelconque des revendications 1 à 7 à une filière d'une extrudeuse de profilés lors de l'extrusion et mouler une pièce moulée avec l'extrudeuse de profilés; et intégrer le stratifié avec un corps principal de la pièce moulée par liaison par fusion thermique.
